# EUROPEAN PATENT APPLICATION

(11) **EP 2 796 414 A1**
(43) Date of publication of application: **29.10.2014**
(21) Application number: 13425062.0
(22) Date of filing: 26.04.2013
(51) Int. Cl.: C01G 23/053, B01J 35/00

(54) **TiO2 nanoparticles synthesis, under shape and size control by means of microwave reaction**

(71) Applicant: Università Del Salento - Dipartimento Di Ingegneria Dell'Innovazione, 73100 Lecce (LE) (IT)
(72) Inventor: Ciccarella, Giuseppe, 73100 Lecce (IT); Carlucci, Claudia, 70126 Bari (IT)
(74) Representative: Bruni, Giovanni

(57) **Abstract**

Method for the preparation of nanoparticels of titanium dioxide comprising the steps of adding in an autoclave a predetermined quantity of a titanium precursor to a solvent and in the following adding an acid additive; maintaining the temperature of the solution at a predetermined value, preferably by providing energy to the solution by means of microwaves, for a specific reaction time; carrying out washings with dichloromethane and/or diisopropyl ether and/or methanol and then drying the product obtained.

## Description

### Field of the invention

The present invention relates to a method for the synthesis of nanocrystal metal oxides, which allows the control of shape and dimensions of the same and which occurs without surface-active agents or other chemicals which make the reaction mixture complex. More in particular the present invention provides a method for nanocrystal synthesis in a microwave reactor with control of temperature, reactants mixing and concentrations thereof.

More in particular the method object of the present invention is a method to synthetize nanorods of TiO₂ anatase by means of hydrolysis of a precursor of titanium in a solvent, in presence of an organic or inorganic acid. It is to be précised that "nanorods" or "rod-shaped nanocrystals" mean nanometric particles with elongated shape, having a length/width ratio equal to 2.

Preferably, the precursor of titanium is titanium tetraisopropoxide (TTIP), the solvent is benzyl alcohol or other suitable alcohol and the acid used comprises acetic acid, oleic acid or boric acid.

With suitable alcohol it is intended a compound of type R₁OH or a mixture of compounds of type R₁OH. As a way of not limiting example there can be used 1-hexanol, 1-heptanol, 1-octanol, 2-ethyl, 1-hexanol, 1-nonanol, 1-decanol, 1-undecanol, 1-dodecanol, isopropyl alcohol, terpinol, benzyl alcohol, p-methoxybenzyl alcohol, or the like. It is known that "rod-shaped" nanocrystals are advantageous with respect to the spherical nanocrystals. In fact, even if nanorods have a lower surface/volume ratio, for example they are advantageous in that they favour the electron transfer because the charges can move more freely on an elongated surface, thus increasing the delocalization and guaranteeing a greater charge separation. These features are useful in a series of industrial applications, for example in the pharmaceutical, cosmetics, photovoltaic, sensors, inks and coating field.

According to another aspect, the present invention provides a method for the synthesis of nonmetal ions doped TiO₂ nanocrystals.

It is known that in order to increase the photocatalytic activity of anatase TiO₂, it is useful to vary its region of solar spectrum absorption. This result can be obtained by doping anatase with non metal elements ions as for example boron, carbon, nitrogen, sulphur and fluorine, which determine a redshift in the absorption of light by TiO₂.

### State of the art

At the state of the art, there are known wet-chemical synthesis methods used to prepare TiO₂, for example the sol-gel, hydrothermal or precipitation method.

The precipitation method allows to prepare TiO₂ nanocrystals with high yields, but the calcination step, needed for the crystallization, determines a high energy consumption and causes an uncontrollable crystal growth and agglomeration of the same, thus avoiding the control of shape and dimension of nanocrystals.

The hydrothermal treatment provides well-crystallized TiO₂ nanocrystals at a relatively low temperature, but it needs long reaction times (usually 12 h or 24 h).

In order to obviate the disadvantages of the synthesis methods known at the state of the art, it is known that it is advantageous to prepare TiO₂ nanocrystals by means of nonhydrolytic methods, since they allow a better control of particle size, shape, crystalline structure, and surface properties. Monodispersed TiO₂ nanorods were synthesized by a nonhydrolytic sol-gel ester elimination reaction starting from titanium (IV) alkoxide in presence of oleic acid at a temperature of 270 °C for 2 h.

In addition, different preparation methods are known to obtain boron-doped nanoparticles by sol-gel methods from hydrolysis of a titanium precursor (titanium tetrachloride or titanium alkoxide such as titanium tetra-n-butyl oxide (TTB), titanium tetraethoxide, titanium tetraisopropoxide) in presence of a boron-source as for example boric acid, boric acid triethyl ester or borane-tetrahydrofurane (BH₃-THF). According to another method known at the state of the art, boron-doped TiO₂ powders were prepared by grinding TiO₂ nanoparticles in presence of boric acid or boric acid triethyl ester and following by calcinations at 450°C.

Also the procedures known at the state of the art for the boron-doped nanoparticles are disadvantageous since they often include anaerobic conditions, different steps of reaction that go on for many hours or days, presence of water to hydrolyze titanium precursor, final treatment of the product with calcinations at high temperature (400-800°C) for some hours to obtain crystalline titanium dioxide.

### DETAILED DESCRIPTION OF THE INVENTION

Aim of the present invention is to provide a method for the preparation of nanocrystal metal oxides, which allows to control the shape and the dimensions of the obtained nanoparticles, and in particular to obtain anatase TiO₂ nanorods up to about 40nm in dimension. The obtainable dimensions of TiO₂ nanorods are variable according to the additive used, as it will be better specified in the following.

In particular, by using acetic acid as additive it is possible to obtain nanorods about 10 nm, by using oleic acid as additive it is possible to obtain nanorods about 40 nm.

The TiO₂ synthesis method, whose embodiments will be described in detail in the following, comprises the following steps of:
a) adding in an autoclave a predetermined quantity of a titanium precursor to a solvent, thus obtaining a yellow solution;
   preferably, the titanium precursor used is TTIP (tetraisopropoxide), the solvent used is preferably an alcohol, and more preferably it is benzyl alcohol. As yet said, as solvent, as a way of not limiting example there can be used 1-hexanol, 1-heptanol, 1-octanol, 2-ethyl, 1-hexanol, 1-nonanol, 1-decanol, 1-undecanol, 1-dodecanol, isopropyl alcohol, terpinol, benzyl alcohol, p-methoxybenzyl alcohol, or the like;
b) adding to the solution obtained in step a) an acid additive in a predetermined molar ratio to the titanium precursor;
   preferably, the additive used comprises acetic acid or oleic acid, or boric acid or a combination thereof; preferably the combination comprises boric acid and oleic acid; preferably the additive is added dropwise to the solution obtained in step a). Preferably, during the operations in steps a) and b) a gentle stirring, preferably by means of a magnetic stirrer, is carried out.
c) Sealing the autoclave and maintaining the temperature of the solution at a predetermined value for a specific reaction time.
   Preferably, the temperature of the solution is maintained at about 200°C; the reaction time is between 10' and 60', preferably between 20' and 50' and more preferably between 40 and 45'. Preferably, the reaction temperature is maintained by providing energy to the solution by means of microwaves. This allows to reduce the reaction times. In fact, by traditional heating, longer reaction times are needed, even longer than 12h. Preferably, the temperature inside the autoclave can be adjusted by providing energy to the solution by means of microwaves at 600 GHz.
d) Collecting the resulting product and carrying out washings with dichloromethane and/or diisopropyl ether and/or methanol; preferably, the operation in step d) is repeated more times, preferably at least three times.
e) Drying the product obtained after the washings in step d).

The product can be dried at room temperature (for a time interval between 8 and 12h) or, in order to speeding the reaction, under vacuum at a temperature of 50°C for 6h.

From the dried solution, it is obtained a powder containing TiO₂ nanocrystals, whose features of shape and dimensions are described in the following. On the nanocrystal surface there is coordinated a capping layer of additive, i.e. of acetic acid or oleic acid.

The "capping layer" can be removed, for example by reducing the carboxylic group by means of the treatment with 1 M lithium triethylborohydride solution in tetrahydrofuran. Alternatively, the capping layer can be removed by digestion in acid environment, by using for example nitric acid.

The capping layer removing, regardless the method used therefore, allows to estimate the photocatalytic activity of the obtained nanocrystals.

It is known that the organic acids used in the synthesis have groups which coordinate on the titania surface and provide a layer which has to be removed in order to estimate the nanocrystal photocatalytic activity. In fact the organic acids used as additives have characteristic bands in the FT-IR spectrum. Once the capping layer is removed by means of the treatment with 1M lithium triethylborohydride solution in tetrahydrofuran or nitric acid, such characteristic bands disappear. For removing the capping layer from dried TiO₂ samples, a superhydride solution which causes the acetic acid reduction on TiO₂ surface is added dropwise under vigorous stirring, at room temperature. Preferably, the superhydride solution comprises 1 M lithium triethylborohydride in THF, in a quantity of 5 mL for 0,1g of dried TiO₂.

After the complete addition of the superhydride, the resulting solution is immersed in an ultrasound bath for 30 min, and in the following it is centrifuged obtaining a white precipitate.

Alternatively, the TiO₂ samples can be digested by dissolving them in nitric acid by means of a procedure which uses microwaves, at the end of which the supernatant is eliminated and the sample dried, obtaining a powder containing TiO₂ nanocrystals.

At this point, the properties of the obtained nanocrystals can be characterized by various techniques, known at the state of the art. In particular, by means of TEM or HR-TEM microscope analysis it is possible to analyze the morphology and the dimensions thereof; by means of FT-IR analysis it is possible to measure the absorption spectrum thereof and to verify the efficacy in removing the capping layer; by means of the ICP technique it is finally possible to estimate the titanium to boron ratio in the boric acid-doped titanium nanocrystals.

In the synthesis method according to present invention, all the chemicals used can be commercial analytical-grade reagents. As example can be used:
a) (IV)-isopropoxide (TTIP, 97%),
b) Benzyl Alcohol (C₆H₅CH₂OH ≥99%)
c) Acetic Acid (CH₃COOH ≥99%)
d) Oleic Acid (C₁₇H₃₃COOH, 90%)
e) Boric Acid (H₃BO₃, 99.5%)

### Brief description of the drawings

Figure 1 shows the TiO₂ synthesis reaction in presence of acetic acid;
Figure 2 shows TEM images of TiO₂ samples obtained in presence of acetic acid;
Figure 3 shows FT-IR absorption spectra of TiO₂ samples obtained in presence of acetic acid;
Figure 4 shows the TiO₂ synthesis reaction in presence of oleic acid;
Figure 5 shows TEM images of TiO₂ samples obtained in presence of oleic acid;
Figure 6 shows FT-IR absorption spectra of TiO₂ samples obtained in presence of oleic acid;
Figure 7 shows the TiO₂ synthesis reaction in presence of boric acid;
Figure 8 shows TEM images of TiO₂ samples obtained in presence of boric acid;

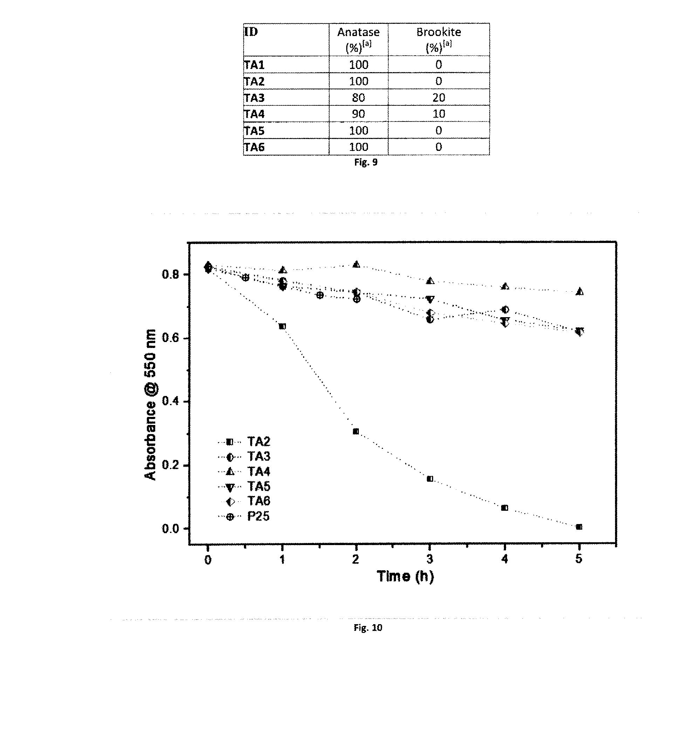

Figure 9 shows the percentages of the crystalline steps found in the nanocrystals prepared with acetic acid.
Figure 10 shows the photocatalytic activity of samples realized with acetic acid tested by means of the degradation of a solution of Rhodamina B.

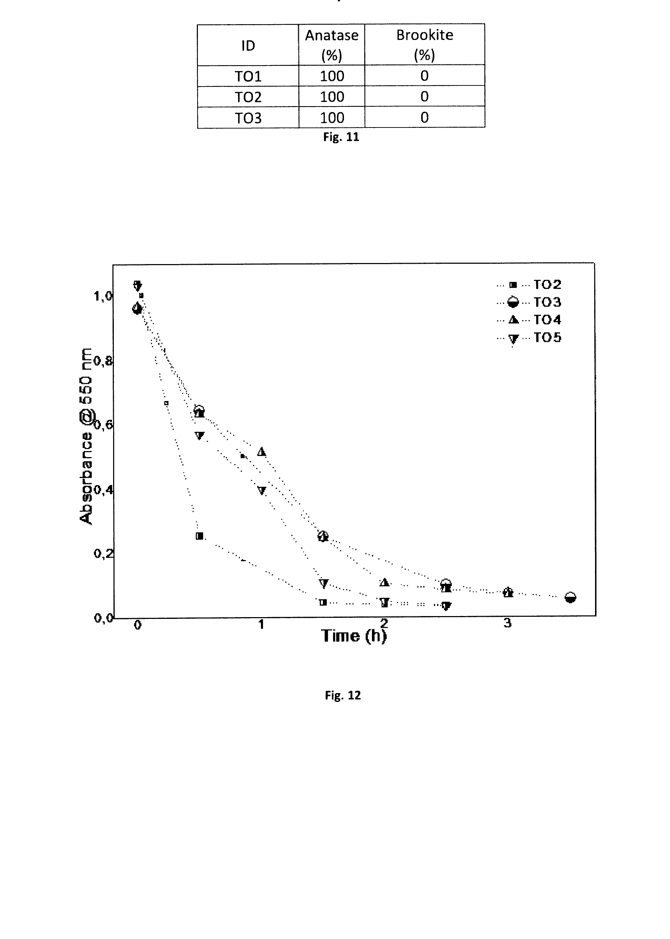

Figure 11 shows the percentages of the crystalline steps found in the nanocrystals prepared with oleic acid.
Figure 12 shows the photocatalytic activity of samples realized with oleic acid tested by means of the degradation of a solution of Rhodamine B.

### Embodiment with acetic acid

In the following it is described an embodiment of the synthesis process which uses acetic acid as additive. It is clear that the quantities of the reagents indicated are only a way of example, and the expert in the field can provide higher quantities of nanocrystalline TiO₂ by maintaining the suitable proportions, without departing from the aims of the present invention.

In the synthesis procedure, 1 mL of TTIP is added to 10 ml of benzyl alcohol in a teflon autoclave thus resulting a yellow solution. In the following the acetic acid (with a molar ratio TTIP to acetic acid variable between 1:1 to 1:20) is added. The autoclave is then sealed and maintained at 210°C for 45 minutes by supplying energy by means of microwaves. The resulting product is collected and washed more times with dichoromethane and finally dried at room temperature for about 12h or heated at a temperature about 50°C under vacuum.

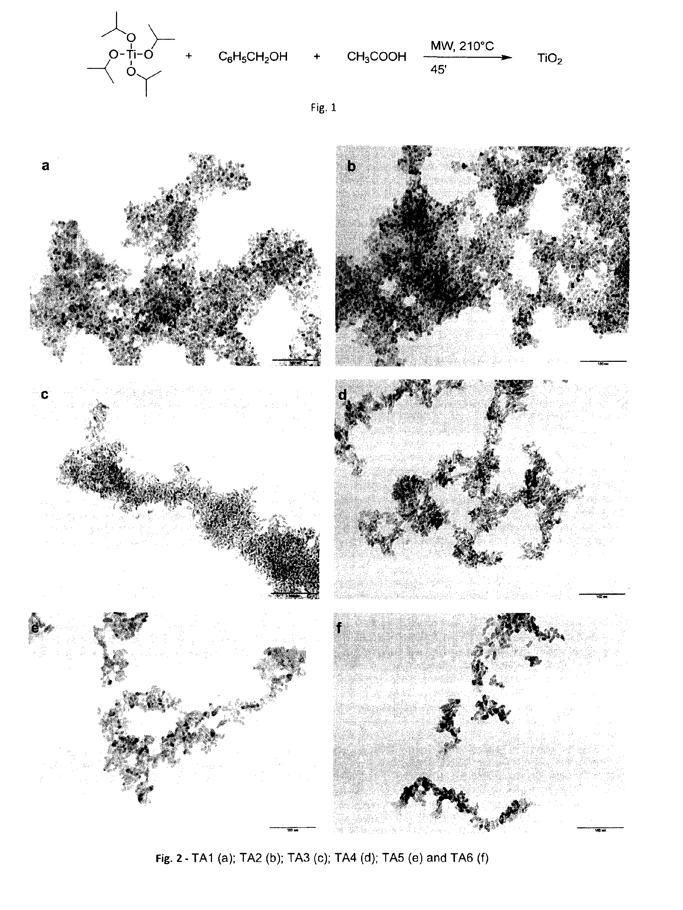

The reactants quantities used are enlisted in table 1. Figure 1 shows the reaction, figure 2 shows the TEM images of the reaction result for the various cases.

The samples with a molar ratio TTIP to acetic acid 1:1, 1:2, 1:5, 1:10, 1:15 and 1:20 are called TA1, TA2, TA3, TA4, TA5 and TA6 and are characterized in detail by means of X ray diffraction (XRD), transmission electron microscopy (TEM), high resolution TEM (HRTEM) and FT-IR analysis.

**Table 1**

| **sample** | **TTIP/acetic acid molar ratio** | **Acetic acid** | **Reaction time** |
|---|---|---|---|
| **TA1** | 1:1 | 3 mmol (0,19 ml) | 45' |
| **TA2** | 1:2 | 6 mmol (0,38 ml) | 45' |
| **TA3** | 1:5 | 15 mmol (0,97 ml) | 45' |
| **TA4** | 1:10 | 30 mmol (1,90 ml) | 45' |
| **TA5** | 1:15 | 45 mmol (2,80 ml) | 45' |
| **TA6** | 1:20 | 60 mmol (3,80 ml) | 45' |

The acetic acid capping layer coordinated on the nanorod surface was removed by means of the treatment with 1M lithium triethylborydride solution in tetrahydrofuran and the photocatalytic activity of TiO₂ samples was then estimated.

The obtained TiO₂ nanorods show a discrete photoactivity able to degrade completely a Rhodamine B solution in about 5h.

The TEM images of the TiO₂ prepared with acetic acid as additive are shown in Figure 2 (a)-(f). In Figure 2 (a), TA1 sample has some aggregates with small spherical nanocrystals (about 5 nm). While increasing the acetic acid used, the diameter of the nanoparticles increases: TA2 sample is made up of nearly spherical or slightly elongated particles (Figure 2 (b)). In Figure 2 (c) and 2 (d) the TA3 and TA4 samples are made up of capsules with an average size of 5 nm (diameter) x 7 nm (length). In figure 2(e) and 2 (f) the TA5 and TA6 samples show a more elongated shape with an average size of 5 nm in diameter and 10 nm in length with respect to the previous four samples.

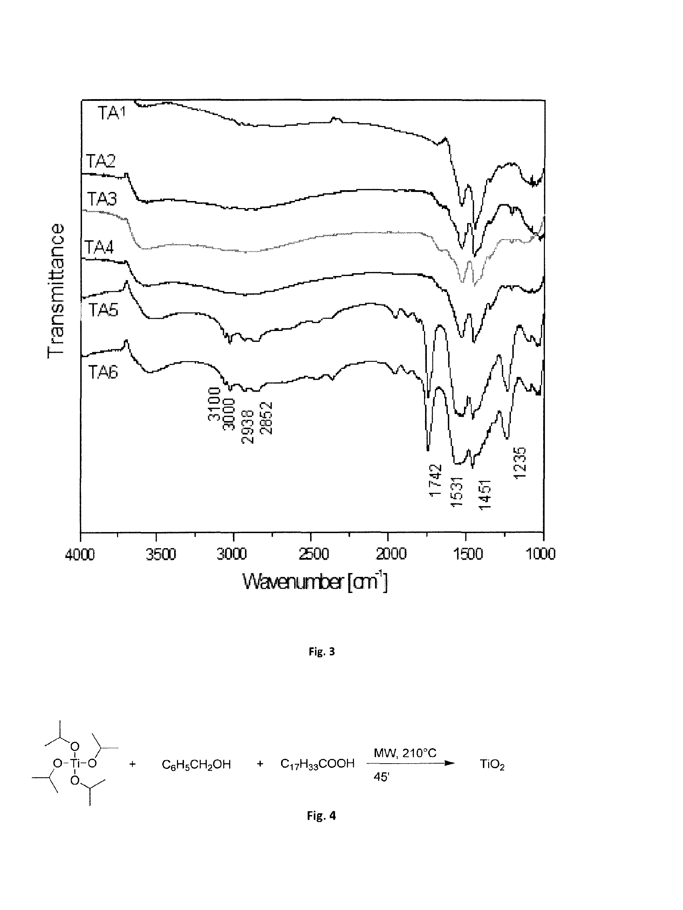

The TiO₂ samples are characterized by means of FT-IR spectroscopy and the results obtained are shown in figure 3. The TA1, TA2, TA3, and TA4 TiO₂ samples have two typical absorption bands at 1451 and 1531 cm⁻¹ related to the symmetric and asymmetric stretching vibrations of the carboxylate groups, while the TA5 and TA6 samples have more absorption bands. The two absorption bands at 2852 and 2938 cm⁻¹ in TA5 and TA6 can be attributed to the symmetric and asymmetric CH₂ stretching vibrations. It is further observed an absorption band at 1742 cm⁻¹ which indicates the presence of the carbonyl group of the free ester obtained by hydrolytic reaction between acetic acid and TTIP. Moreover, the peaks between 3000 and 3100 cm⁻¹ can be attributed to the C-H stretching of the aromatic ring.

It is to be observed that the samples indicated by TA5 and TA6 having more absorption bands, are those obtained with a greater concentration of acetic acid and whose nanorods show a greater length.

In all the samples realized, the dominating crystalline structure is anatase. Only in the TA3 and TA4 samples it is observed a little percentage of brookite, confirmed by the XRD analysis.

### Embodiment with oleic acid

A similar procedure was used to synthesize anatase TiO₂ nanorods using TTIP as precursor and benzyl alcohol as solvent, and oleic acid as additive.

1 mL of TTIP is added to 10 ml of benzyl alcohol in a teflon autoclave thus obtaining a yellow solution. In the following the oleic acid (with a molar ratio TTIP to oleic acid variable between 1:4 to 1:12) is added. The autoclave is then sealed and maintained at 210°C for an interval of time reaction variable between 10 and 45 minutes while carrying out a slight magnetic stirring. The resulting product is washed three times with dichoromethane, centrifuged and finally, once the supernatant is removed, dried at room temperature for an interval of time between 8 and 12h, or dried under vacuum at a temperature about 50°C for about 6h.

The TiO₂ nanocrystal samples obtained with a molar ratio TTIP to oleic acid 1:4, 1:8 and 1:12 respectively are called TO1, TO2 and T03. In table 2 there are reported the reagent quantities used and the reaction time used for each sample.

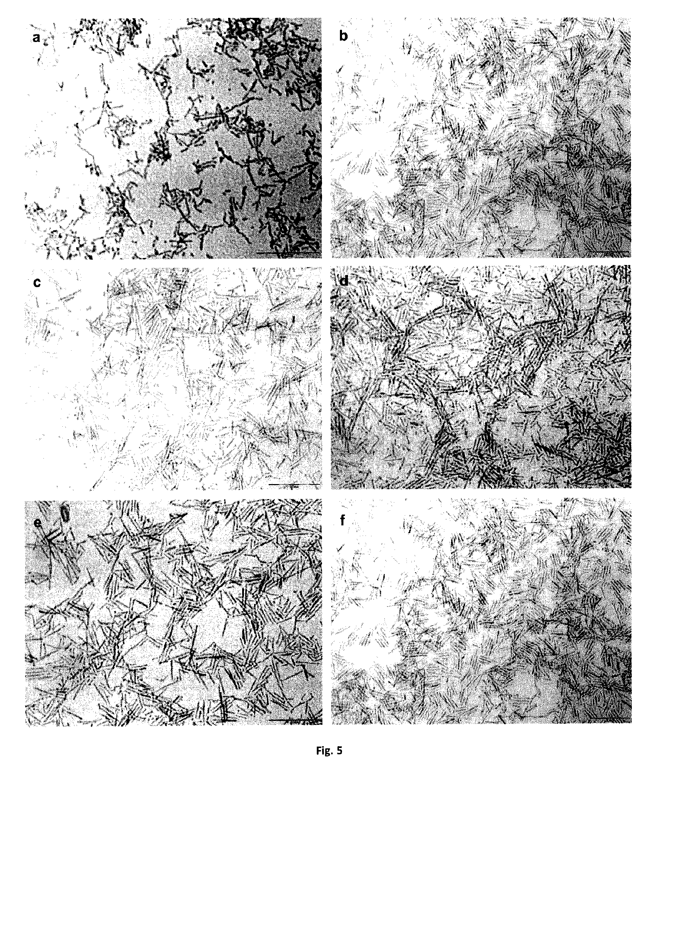

In figure 4 it is shown the synthesis scheme and in figure 5 the TEM images of the samples (figure 5-a: TO1 sample; figure5-b and 5-f: TO2 sample; figure 5-c TO3 sample; figure 5-d T04 sample; figure 5-e T05 sample). The TiO₂ nanocrystals obtained with the described process show a relatively high photoactivity able to degrade completely a Rhodamine B solution in only 90 minutes.

**Table 1**

| **Sample** | **TTIP/oleic acid molar ratio** | **oleic acid** | **Reaction time** |
|---|---|---|---|
| **TO1** | 1:4 | 12 mmol (4,28 ml) | 45 min |
| **TO2** | 1:8 | 24 mmol (8,57 ml) | 45 min |
| **TO3** | 1:12 | 36 mmol (12,9 ml) | 45 min |
| **TO4** | 1:8 | 24 mmol (8,57 ml) | 10 min |
| **TO5** | 1:8 | 24 mmol (8,57 ml) | 20 min |

As shown in Figure 5(a), T01 is nearly completely made up of nanordos of various lengths and comprises only few nearly spherical particles; the relative quantity of nanorods is greater than 80%. The sample T02 Figure 5 (b) is made up of nanorods with an estimated average size of 3 nm in diameter x 40 nm in length.

By means of XRD analysis it is possible to observe that the crystalline structure in the nanocrystals obtained using oleic acid as precursor is anatase.

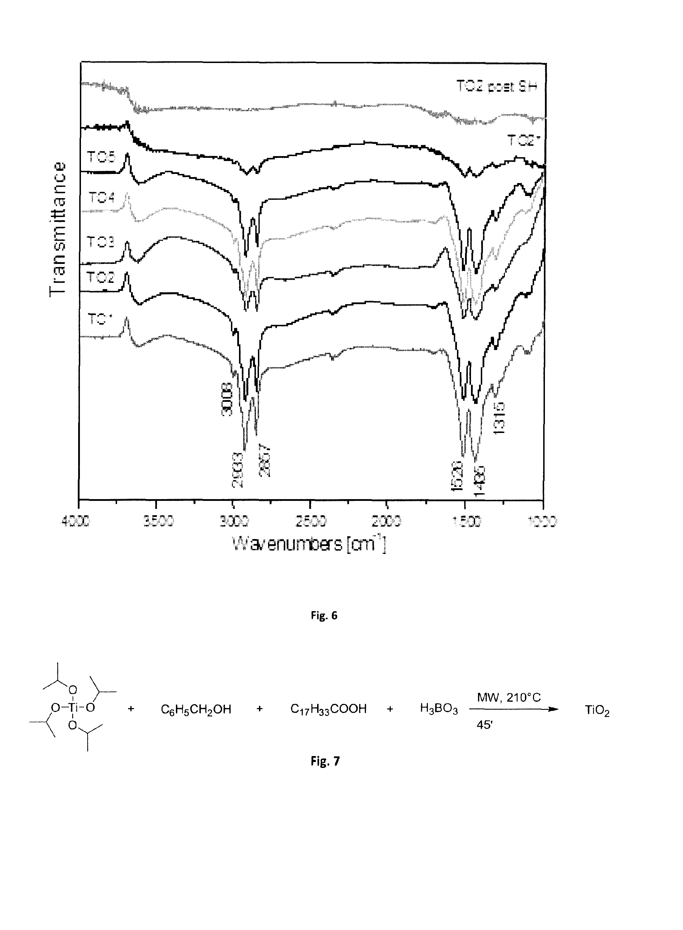

TiO₂ samples are characterized by means of FT-IR spectroscopy and the results obtained are shown in figure 6. The T01, TO2 and TO3 TiO₂ samples exhibit symmetric and asymmetric C-H stretching vibrations at 2933 and 2857 cm⁻¹, respectively. The peak at 2960 cm⁻¹ can be associated with the asymmetric stretching of the terminal - CH₃ group of the alkyl chain. In particular, before removing the oleic acid capping layer it is also present a band at 3008 cm⁻¹, attributable to the olefinic C-H stretching.

Moreover, the symmetric and asymmetric stretching vibrations of carboxylate are detected (two characteristic bands centered at 1526 and 1435 cm⁻¹).

As observed also for the samples obtained with acetic acid, the oleic acid used as additive is provided with characteristic bands in the FT-IR spectrum, which after the treatment with the lithium triethylborohydride solution disappear. For example in the sample TO₂, there can be observed characteristic bands at 1435, 1536, 2867 and 2933 cm⁻¹.

### Embodiment of boron-doped TiO₂ nanoparticles

As yet said, a method for increasing the photocatalytic activity of TiO₂ in the anatase form is to vary the absorption region of the solar spectrum and to increase its thermal stability, by doping it with non metal ions, as for example the boron ones.

The method according to the present invention allows to synthesize boron-doped TiO₂ nanoparticles by means of hydrolysis of titanium tetraisopropoxide (TTIP) in benzyl alcohol, in presence of boric acid and oleic acid. The synthesis reaction is shown in figure 7.

1 mL (3.36 mmol) of TTIP is added to 5ml (48.2 mmol) of benzyl alcohol in a Teflon autoclave thus forming a yellow solution. In the following the oleic acid and the boric acid (with a molar ratio boric acid to oleic acid variable between 1:1 to 1:12, 2:1 to 2:12 and 4:1 to 4:12) are added. The autoclave is then sealed and maintained at 210°C for 45 minutes while exerting a slight magnetic stirring. The resulting product is collected and washed more times with methanol, centrifuged and finally dried, once the supernatant liquid is removed, at room temperature for an interval of time between 8 and 12h or under vacuum at 50°C for an interval of time equal to 6h.

The TiO₂ nanocrystals obtained with a molar ratio boric acid to oleic acid of 1:1, 1:4, 1:6, 1:8, 1:12, 2:1, 2:4, 2:6, 2:8, 2:12, 4:1, 4:4, 4:6, 4:8, and 4:12 are called, respectively, TOB3, TOB11, TOB2, TOB10, TOB1, TOB6, TOB13, TOB9, TOB15, TOB8, TOB14, TOB7, TOB5, TOB12 and TOB4 and are characterized in detail by means of transmission electron microscopy (TEM).

In order to allow the TEM analysis, the samples to be analyzed are prepared by dissolving few milligram of product in 2ml of ethanol and after they are immersed in an ultrasound bath for 5 minutes until the solution becomes opalescent.

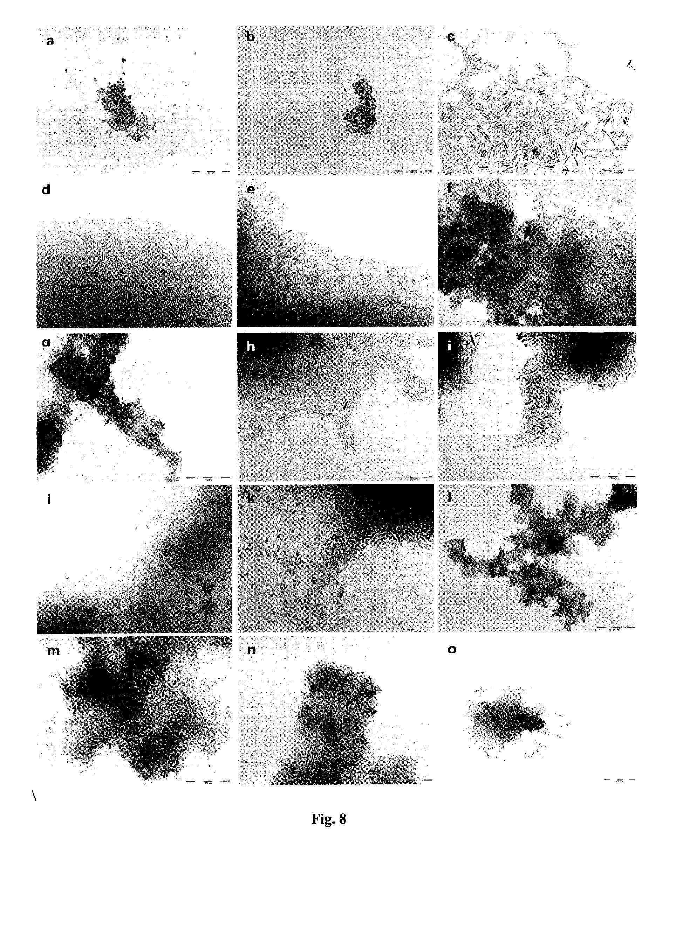

The reactants quantities used for each sample are reported in table 3. The morphological characterizations of the B-TiO₂ nanopowders was performed by using transmission electron microscopy (TEM) and the results are reported in figure 8. The boron/titanium ratio of the samples (mineralized in nitric acid and hydrofluoric acid) was estimated by ICP-AES technique. The results are reported in table. Figure 8 shows the TEM images of the boron-doped nanoparticles of titanium dioxide. (10-a:TOB3; 10-b: TOB11, 10-c:TOB2, 10-d:TOB10; 10-e:TOB1, 10-f:TOB6, 10-g:TOB13, 10-h:TOB9, 10-i: TOB15, 10-j:TOB8, 10-k:TOB14, 10-I:TOB7, 10-m:TOB5, 10-n:TOB12, 10-o:TOB4).

It can be noted that there is a relationship between the size of the particles and the amount of the boron precursor employed in the reaction. When the amount of oleic acid increases the formation of nanorods is observed while when the quantity of boron increases the size of the particles is reduced.

The TEM analyses revealed polyhedral form crystals. Moreover, the increase in boric acid concentration used in the synthesis process leads to a dimension reduction of the nanocrystals thus showing the limiting effect on the growth. From the ICP-AES analysis it is possible to calculate the total ratio B:Ti of the synthetized nanoparticles. The data indicate that this ratio increases with the increasing in quantity of H₃BO₃ used for the synthesis. Vice versa, by means of the TEM analysis, it was found that the increase in boric acid quantity used in the synthesis process causes a limited reduction in the dimensions of the nanocrystals, as well as a lower dispersion of the same.

Also in the synthesis process embodiment which uses boric acid, the average length of nanorods obtained reaches about 40 nm, and the length/width ratio is greater than 10.

**Table 3**

| **sample** | **TTIP/boric acid/oleic acid molar ratio** | **Boric acid mmol** | **Oleic acid mmol** | **B/Ti** |
|---|---|---|---|---|
| **TOB3** | 1:1:1 | 3,36 (0,208 g) | 3,36 (1,30 ml) | 0.0128 |
| **TOB11** | 1:1:4 | 3,36 (0,208 g) | 13,44 (4,28 ml) | 0.0372 |
| **TOB2** | 1:1:6 | 3,36 (0,208 g) | 20,36 (6,40 ml) | 0.0108 |
| **TOB10** | 1:1:8 | 3,36 (0,208 g) | 26,90 (8,57 ml) | 0.0240 |
| **TOB1** | 1:1:12 | 3,36 (0,208 g) | 40,32 (12,90 ml) | 0.0245 |
| **TOB6** | 1:2:1 | 6,72 (0,415 g) | 3,36 mmol (1,30 ml) | 0.0221 |
| **TOB13** | 1:2:4 | 6,72 (0,415 g) | 13,44 (4,28 ml) | 0.0601 |
| **TOB5** | 1:2:6 | 6,72 (0,415 g) | 20,36 (6,40 ml) | 0.1138 |
| **TOB12** | 1:2:8 | 6,72 (0,415 g) | 26,90 (8,57 ml) | 0.0987 |
| **TOB4** | 1:2:12 | 6,72 (0,415 g) | 40,32 (12,90 ml) | 0.0641 |
| **TOB9** | 1:4:1 | 13,44 (0,832 g) | 3,36 (1,30 ml) | 0.3870 |
| **TOB15** | 1:4:4 | 13,44 (0,832 g) | 13,44 (4,28 ml) | 0.2227 |
| **TOB8** | 1:4:6 | 13,44 (0,832 g) | 20,36 (6,40 ml) | 0.3364 |
| **TOB14** | 1:4:8 | 13,44 (0,832 g) | 26,90 (8,57 ml) | 0.1442 |
| **TOB7** | 1:4:12 | 13,44 (0,832 g) | 40,32 (12,9 ml) | 0.2478 |

## Claims

1. Method for the preparation of nanocrystal titanium dioxide comprising the steps of:
a) adding in an autoclave a predetermined quantity of a titanium precursor to a solvent;
b) adding to the solution obtained in step a) an acid additive in a predetermined molar ratio to the titanium precursor;
c) sealing the autoclave and maintaining solution temperature at a predetermined value for a specific reaction time.

2. Method for the preparation of nanocrystal titanium dioxide according to claim 1, further comprising after step c) the steps of:
d) collecting the resulting product and carrying out washings with dichloromethane and/or diisopropyl ether and/or methanol;
e) drying the product obtained after the washings in step d).

3. Method for the preparation of nanocrystal titanium dioxide according to claim 1 or 2, wherein the titanium precursor is TTIP (tetrahydropropoxide).

4. Method for the preparation of nanocrystal titanium dioxide according to any one of claims 1 to 3, wherein the solvent used is an alcohol, preferably benzyl alcohol.

5. Method for the preparation of nanocrystal titanium dioxide according to any one of claims 1 to 4, wherein the additive used comprises acetic acid or oleic acid.

6. Method for the preparation of nanocrystal titanium dioxide according to any one of claims 1 to 5, wherein the additive used comprises boric acid.

7. Method for the preparation of nanocrystal titanium dioxide according to any one of claims 1 to 6, wherein in step c) it is maintained a temperature higher than 200°C, and preferably about 210°C and the reaction time is between 10' and 45'.

8. Method for the preparation of nanocrystal titanium dioxide according to any one of the preceding claims, wherein the reaction temperature is maintained by providing energy to the solution by means of microwaves.

9. Method for the preparation of nanocrystal titanium dioxide according to any one of the preceding claims, wherein at least 80% of the nanocrystals are nanorods, with a length/width ratio greater or equal to 2.

10. Method for the preparation of nanocrystal titanium dioxide according to claims 3, 4, and 5 wherein the molar ratio between TTIP and acetic acid is between 1:15 and 1:20 and the nanocrystals obtained comprise nanorods with length equal to about 10 nm and length/width ratio equal to about 2.

11. Method for the preparation of nanocrystal titanium dioxide according to claims 3, 4 and 5, wherein the molar ratio between TTIP and acetic acid is between 1:4 and 1:12 and the nanocrystals obtained comprise nanorods with length equal to about 40 nm and length/width ratio greater than 10.

12. Method for the preparation of nanocrystal titanium dioxide according to any one of claims 7 to 11, wherein the nanocrystals obtained comprise nanorods with length equal to about 40 nm and length/width ratio greater than 10.

13. Method for the preparation of nanocrystal metal oxides according to claims 4, 6 and 7, wherein the molar ratio between boric acid and oleic acid is between 1:1 and 1:12 and the ratio between titanium and boron in the nanocrystals obtained is between 40 and 100.

14. Method for the preparation of nanocrystal metal oxides according to claims 4, 6 and 7, wherein the molar ratio between boric acid and oleic acid is between 2:1 and 2:12 and the ratio between titanium and boron in the nanocrystals obtained is between 10 and 50.

15. Method for the preparation of nanocrystal metal oxides according to claims 4, 6 and 7, wherein the molar ratio between boric acid and oleic acid is between 4:1 and 4:12 and the ratio between titanium and boron in the nanocrystals obtained is lower than 10.
